# EUROPEAN PATENT APPLICATION

(11) **EP 1 755 017 A2**
(43) Date of publication of application: **21.02.2007**
(21) Application number: 06118394.3
(22) Date of filing: 03.08.2006
(51) Int. Cl.: G06F 1/16

(54) **Computer system and control method thereof**

(30) Priority: 05.08.2005 KR 20050071934
(71) Applicant: Samsung Electronics Co., Ltd., Suwon-si 442-742 Gyeonggi-Do (KR)
(72) Inventor: Choi, Byung-goo, Gyeonggi-do (KR)
(74) Representative: Walaski, Jan Filip

(57) **Abstract**

A computer system such as a portable computer is provided with a computer main body and a display panel rotatably coupled to the computer main body so as to open and close the computer main body; a disk accommodating part provided in a plate surface of the computer main body to accommodate an optical disk; a disk cover member coupled to the computer main body to rotatably open and close the disk accommodating part; a detector unit to detect a rotating position of the display panel with respect to the computer main body, when the disk accommodating part is open by the disk cover member; an alarm unit to output a predetermined alarm signal; and a control unit arranged to control the alarm unit to output the alarm signal based on the rotating position detected by the detector unit. As a result, a surface of a display panel can be prevented from being damaged due to contact with a disk cover member when the display panel closes a computer main body when a disk accommodating part provided in a plate surface of the computer main body is open.

## Description

The present invention relates to a computer system and a control method thereof, and more particularly, to a portable computer which prevents a surface of a display panel from being damaged due to contact with a disk cover member when the display panel closes a computer main body when a disk accommodating part provided in a plate surface of the computer main body is open, and a control method thereof.

Generally, a computer system comprises a display panel to provide a visual display of an image, and a computer main body which supports the display panel and is mounted with various hardware. Such a computer system is generally a portable computer, such as a laptop computer, a notebook computer, a palmtop computer, a personal digital assistant (PDA), etc. However, other types of desktop computers and mobile devices can also be utilized.

An optical disk drive (ODD), such as a CD-ROM drive, a DVD drive, a HD-DVD drive, and a Blu-Ray drive, is provided in the computer main body of the portable computer for a user's convenience. Generally, the optical disk drive (ODD) is provided in a bay of a lateral side of the computer main body.

Recently, there have been designs to provide a disk accommodating part in a plate surface of the computer main body to accommodate an optical disk and to install a disk cover member in the computer main body to rotatably open and close the disk accommodating part, thereby making the computer main body slimmer.

However, when the display is closed relative to the computer main body, while the disk cover member is open relative to the disk accommodating part, the surface of the display panel may become damaged by contact between the disk cover member and the display panel in the computer system.

Embodiments of the present invention provide a computer system such as a portable computer designed to prevent a surface of a display panel from becoming damaged due to contact with a disk cover member, when the display panel closes a computer main body when a disk accommodating part provided in a plate surface of the computer main body is open.

Additional features and/or advantages of the present invention will be set forth in the description which follows.

In accordance with an embodiment of the present invention, a computer system such as a portable computer is provided with a computer main body; a display panel rotatably coupled to the computer main body so as to open and close the computer main body; a disk accommodating part provided in a plate surface of the computer main body so as to accommodate an optical disk; a disk cover member coupled to the computer main body so as to rotatably open and close the disk accommodating part; a detector unit arranged to detect a rotating position of the display panel with respect to the computer main body, when the disk accommodating part is open by the disk cover member; and a control unit to generate an alarm signal based on the rotating position of the display panel and a rotating position of the disk cover member.

According to an aspect of the present invention, the detector unit comprises a display panel rotation detector which detects the rotating position of the display panel with respect to the computer main body, and a disk cover opening/closing detector which detects whether the disk accommodating part is open or closed by the disk cover member.

According to another aspect of the present invention, the control unit comprises an alarm unit and controls the alarm unit to output the alarm signal, when the disk cover opening/closing detector detects that the disk accommodating part is open and when the display panel rotation detector detects that the display panel is rotated to close the computer main body within a predetermined angle.

According to another aspect of the present invention, the alarm unit comprises one or more speakers to output a sound, and an audio signal generator to output the alarm signal, via the one or more speakers, under the control of the control unit.

According to another aspect of the present invention, the control unit controls the audio signal generator to output a PC beep signal as the alarm signal.

According to another aspect of the present invention, the control unit comprises a logic calculator which logically calculates a detection result of the disk cover opening/closing detector and a detection result of the display panel rotation detector, and controls whether the audio signal generator outputs the PC beep signal as the alarm signal.

According to another aspect of the present invention, the control unit comprises an audio controller which supplies an audio signal to the audio signal generator corresponding to the alarm signal; a microcomputer which generates an interrupt signal when the disk cover opening/closing detector detects that the disk accommodating part is open and the display panel rotation detector detects that the display panel is rotated to close the computer main body within the predetermined angle; and a control routine which controls the audio controller to output the audio signal corresponding to the alarm signal according to the interrupt signal of the microcomputer.

According to another aspect of the present invention, a rotation shaft of the display panel and that of the disk cover member are provided with respect to the computer main body and face each other.

According to another aspect of the present invention, a rotation shaft of the display panel and that of the disk cover member are provided with respect to the computer main body and cross each other.

In accordance with another embodiment of the present invention, a method of controlling a computer system, such as a portable computer, is provided with a computer main body, a display panel to be rotatably coupled to the computer main body so as to open and close the computer main body, a disk accommodating part provided in a plate surface of the computer main body to accommodate an optical disk, and a disk cover member coupled to the computer main body to rotatably open and close the disk accommodating part. Such a method comprises: detecting a rotating position of the display panel with respect to the computer main body; detecting whether the disk accommodating part is open or closed by the disk cover member; and outputting a predetermined alarm signal when the disk accommodating part is open and the display panel is rotated to close the computer main body within a predetermined angle.

According to an aspect of the present invention, the predetermined alarm signal is an audio generated via a speaker.

In accordance with another embodiment of the present invention, a computer system is provided with a main body having a disk accommodating portion located on a plate surface of the main body to accommodate an optical disk; a display panel rotatably coupled to the main body so as to open or close the main body; a disk cover rotatably coupled to the main body so as to open or close the disk accommodating portion of the main body; and a detection mechanism arranged to detect a rotating position of the display panel relative to the main body and a rotating position of the disk cover relative to the disk accommodating portion of the main body, and to alert a user based on the rotating positions of the display panel relative to the main body and the disk cover relative to the disk accommodating portion of the main body.

According to an aspect of the present invention, the detector mechanism comprises a display panel rotation detector arranged to detect the rotating position of the display panel with respect to the main body; a disk cover opening/closing detector arranged to detect whether the disk accommodating portion of the main body is open or closed by the disk cover; and a control unit arranged to alert a user based on the rotating positions of the display panel relative to the main body and the disk cover relative to the disk accommodating portion of the main body.

According to an aspect of the present invention, the control unit comprises an alarm unit and controls the alarm unit to output the alarm signal, when the disk cover opening/closing detector detects that the disk accommodating portion of the main body is open and when the display panel rotation detector detects that the display panel is rotated to close the main body within a predetermined angle.

According to an aspect of the present inventio, the alarm unit comprises one or more speakers to output a sound, and an audio signal generator to output the alarm signal, via the one or more speakers.

According to another aspect of the present invention, the control unit comprises a logic calculator which logically calculates a detection result of the disk cover opening/closing detector and a detection result of the display panel rotation detector, and controls whether an alarm signal is generated based on the detection results.

According to another aspect of the present invention, the control unit comprises an audio controller which supplies an audio signal to the audio signal generator corresponding to the alarm signal; a microcomputer which generates an interrupt signal when the disk cover opening/closing detector detects that the disk accommodating portion is open and the display panel rotation detector detects that the display panel is rotated to close the main body within the predetermined angle; and a control routine which controls the audio controller to output the audio signal corresponding to the alarm signal according to the interrupt signal of the microcomputer.

According to an aspect of the present invention, a rotation shaft of the display panel and that of the disk cover are provided with respect to the main body and face each other. Alternatively, a rotation shaft of the display panel and that of the disk cover are provided with respect to the main body and cross each other.

Embodiments of the invention will now be described by way of example with reference to the accompanying drawings, in which:
Figures 1 and 2 are perspective views of a computer system such as a portable computer according to an embodiment of the present invention;
Figure 3 is a general block diagram of a computer system according to an embodiment of the present invention;
Figure 4 is a control block diagram of a computer system according to a first embodiment of the present invention; and
Figure 5 is a control block diagram of a computer system according to a second embodiment of the present invention.

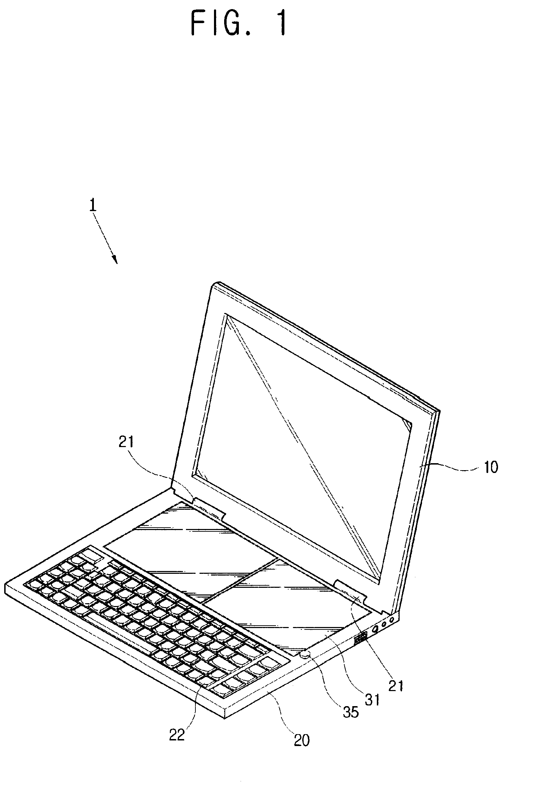

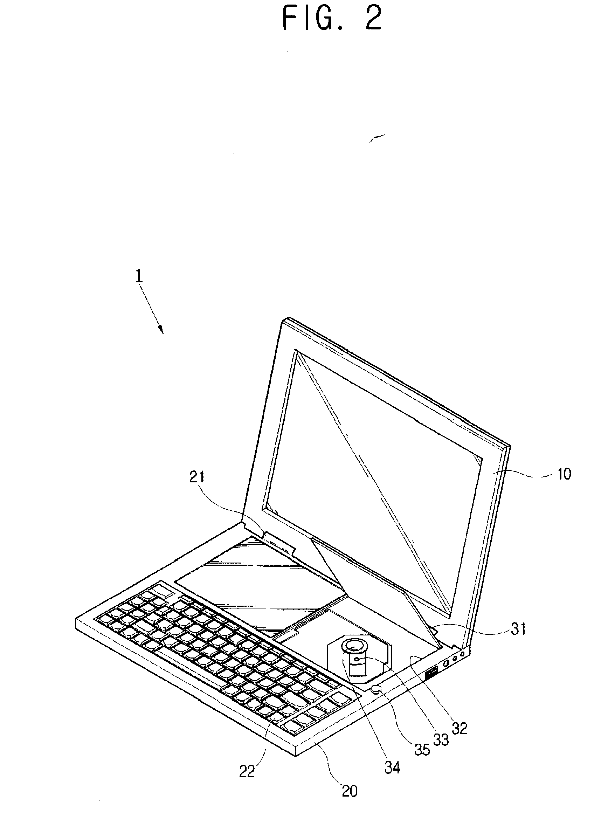

Figures 1 and 2 illustrate an example computer system, such as a portable computer, according to an embodiment of the present invention. As shown in Figures 1 and 2, a portable computer 1 comprises a computer main body 20, a display panel 10 which is rotatably coupled to the computer main body 20 to open and close the computer main body 20, a disk accommodating part 32 which is provided in a plate surface of the computer main body 20, and a disk cover member 31 to open and close the disk accommodating part 32.

The computer main body 20 may comprise a hinge 21 which is provided in a rear of the computer main body 20 so as to couple the display panel 10 to the computer main body 20, and to rotatably support the display panel 10 as the display panel 10 rotates about the computer main body 20 between a closed position (i.e., when the display panel 10 covers the computer main body 20) and an open position (i.e., when the display panel 10 is open relative to the computer main body 20). While a hinge is utilized in the example embodiment of the present invention, a pivot, a joint or similar mechanism can also be utilized to enable the display panel 10 to pivot about the computer main body 20.

In addition, a connection port may be provided in a side of the computer main body 20 to be coupled with an earphone, a microphone, a USB, an IEEE 1394 (Firewire), Ethernet connection, modem connection, and power and other port.

The display panel 10 comprises a thin display panel, such as a liquid crystal display (LCD) panel or other display technology to display an image thereon. The display panel 10 is coupled with the hinge 21 to upwardly and downwardly rotate with respect to the computer main body 20. Thus, the display panel 10 downwardly rotates with respect to the computer main body 20 to close the computer main body 20, and upwardly rotates with respect to the computer main body 20 to open the computer main body 20.

A keyboard 22 is provided in the plate surface of the computer main body 20, i.e., in the plate surface that is closed by the display panel 10 when the display panel 10 downwardly rotates. The disk accommodating part 32 is provided in the plate surface of the computer main body 20 to accommodate an optical disk.

In a computer system 1, as shown in Figure 1 and Figure 2, the disk accommodating part 32 is provided near the hinge 21 of the computer main body 20, and the keyboard 22 is provided in an opposite side of the hinge 21. Alternatively, positions of the disk accommodating part 32 and the keyboard 22 of the portable computer 1 according to the present invention may be changed.

The disk accommodating part 32 accommodates an optical disk, such as a compact disk (CD), a digital versatile disk (DVD), a CD-RW disk, a DVD-RW disk, a DVD+RW disk, a high definition (HD-DVD), a Blu-ray disk and other type of storage media. The disk accommodating part 32 may comprise a disk support 34 to rotatably accommodate and support an optical disk and an optical pickup 33 to record data on the optical disk supported by the disk support 34 or to read recorded data from the optical disk.

The disk cover member 31 is provided on an upper portion of the disk accommodating part 32, and is rotatably coupled to the computer main body 20 to rotatably open and close the disk accommodating part 32. The axes of a rotating shaft of the disk cover member 31, as shown in Figures 1 and 2, and a rotating shaft of the display panel 10 are parallel to each other, as an example of the present invention. Alternatively, the axes of the rotating shaft of the disk cover member 31 and that of the display panel 10 may cross each other.

If a user presses an open button 35 which is provided on a plate surface of the computer main body 20, the disk cover member 31 may be ejected from the plate surface of the computer main body 20 so as to open the disk accommodating part 32. Such a disk cover opening button 35 can be located any where in the computer main body 20 to enable a user to easily open the disk cover member 31 relative to the plate surface of the computer main body 20 to access the disk accommodating part 32.

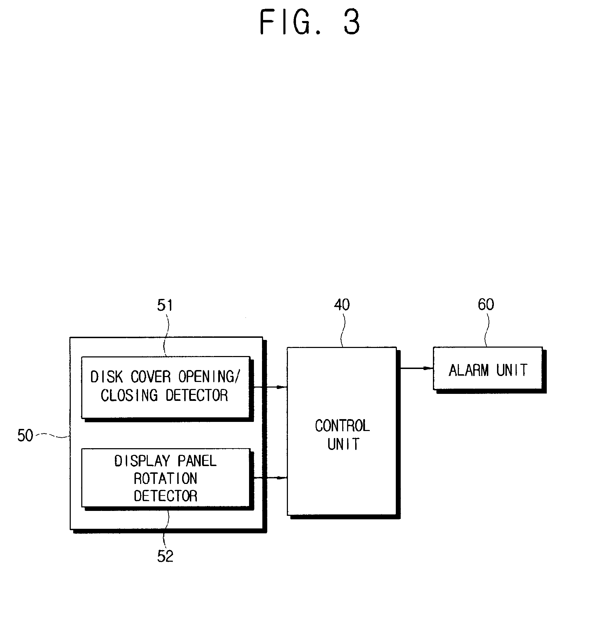

Turning now to Figure 3, a general block diagram of an example computer system such as a portable computer according to the present invention is illustrated. As shown in Figure 3, the portable computer 1 according to the present invention comprises a detector unit 50, an alarm unit 60 and a control unit 40 to control the foregoing elements.

The detector unit 50 comprises a display panel rotation detector 52 and a disk cover opening/closing detector 51. The detector unit 50 provides the control unit 40 with rotating position information of the display panel 10 with respect to the computer main body 20.

The display panel rotation detector 52 detects a rotating position of the display panel 10 with respect to the computer main body 20, i.e., when the display panel 10 is rotating between a closed position and an open position. If the display panel rotation detector 52 detects that the display panel 10 downwardly rotates to within a predetermined angle of the computer main body 20 to close it , a predetermined first detection signal may be generated and forwarded to the control unit 40.

Here, the first detection signal is output within the predetermined angle at which the disk cover member 31 and the display panel 10 do not contact each other, when the display panel 10 downwardly rotates in the case where the disk cover member 31 is positioned so that the disk accommodating part 32 is open.

The disk cover opening/closing detector 51 detects whether the disk accommodating part 32 is open or closed by the disk cover member 31. Here, the disk cover opening/closing detector 51 may output a predetermined second detection signal to the control unit 40 when the disk cover member 31 opens the disk accommodating part 32.

The control unit 40 controls the alarm unit 60 to output an alarm signal, when the second detection signal is received from the disk cover opening/closing detector 51 as the disk accommodating part 32 is open, and when the first detection signal is received from the display panel rotation detector 52 as the display panel 10 downwardly rotates to within a predetermined angle of the computer main body 20 to close it. Accordingly, a user can be alerted and may then recognize that the disk accommodating part 32 is open, when he/she downwardly rotates the display panel 10.

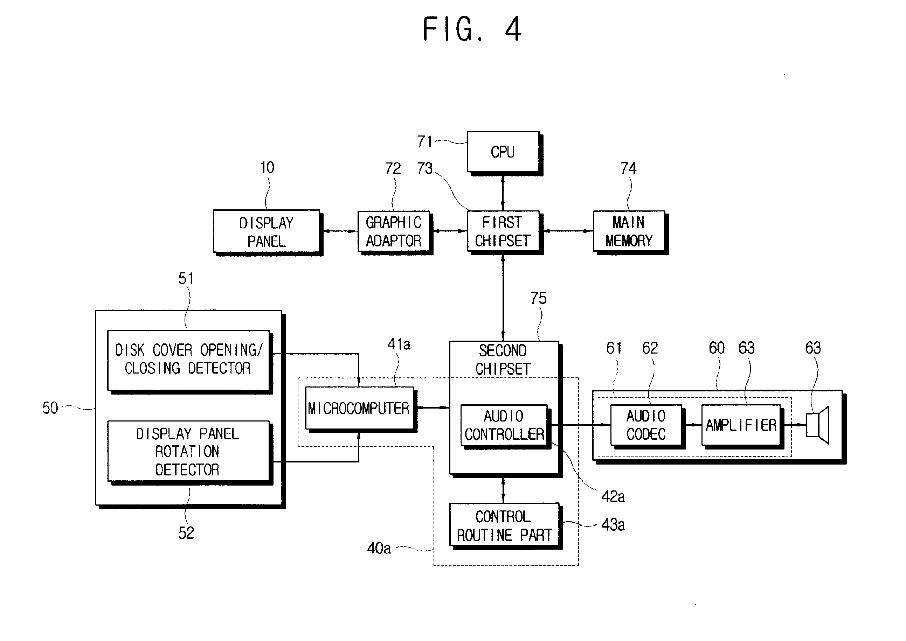

Figure 4 is a control block diagram of an example computer system, such as a portable computer according to a first embodiment of the present invention. Referring to Figure 4, the portable computer 1 may comprise a CPU (central processing unit) 71, a graphics adaptor 72 which is connected with the display panel 10 to transmit a video signal to the display panel 10, a first chipset 73, a main memory 74, and a second chipset 75. The main memory 74 may include a read-only-memory (ROM) for storing an operating system (OS), and a random-access-memory (RAM) for serving as a working memory for the portable computer 1. Such a memory 74 can also be incorporated into the first chipset 73. As described in connection with Figure 1, Figure 2 and Figure 3, the portable computer 1 also comprises a control unit 40a, a detection unit 50 including a disk cover opening/closing detector 51, a display panel rotation detector 52, and an alarm unit 60.

The first chipset 73 manages data which travels between the CPU 71, the main memory 74 and the graphics adaptor 72. The first chipset 73 may be provided as a memory control hub (MCH) or a northbridge which is provided with a memory controller to control access to the main memory 74. Alternatively, the first chip set 73 may be provided as a graphics and memory control hub (GMCH) which is integrally provided with the graphics adaptor 72 for graphics applications and video functions and to control access to the display panel 10.

The second chipset 75 manages data which travels between the elements of the portable computer 1, except for the CPU 71 and the graphics adaptor 72. For example, the second chipset 75 manages data which travels between various input and output (I/O) devices connected to the portable computer 1, including, for example, a keyboard controller for controlling operations of an alphanumeric keyboard, a cursor control device, such as a mouse, track ball, touch ball, joystick etc, a mass storage device such as magnetic tapes, hard disk drives (HDD), floppy disk drive (FDD), and serial and parallel ports to printers, scanners and memory sticks. The second chipset 75 may be provided as an input/output control hub (ICH) or a southbridge which is provided to access to a variety of I/O devices as described above.

The alarm unit 60 may comprise one or more speakers 63 to output a sound and/or an audio signal generator 61 to output a sound, via one or more speakers 63. Here, the audio signal generator 61 exchanges data including audio signals through the second chipset 75.

The audio signal generator 61 may comprise an audio codec 62 and an amplifier 63. The audio codec 62 converts an input signal into an analog audio signal to output the same. The amplifier 63 amplifies the analog audio signal output from the audio codec 62 to output a sound through the one or more speakers 63.

The control unit 40a according to the first embodiment of the present invention may comprise a microcomputer 41 a, an audio controller 42a, and a control routine part 43a.

The audio controller 42a outputs a digital type audio signal to the audio codec 62 of the audio signal generator 61. In addition, the audio controller 42a supplies the audio signal to the audio codec 62 of the audio signal generator 61 corresponding to an alarm signal.

The microcomputer 41a generates an interrupt signal when the second detection signal is received from the disk cover opening/closing detector 51 as the disk accommodating part 32 is open, and when the first detection signal is received from the display panel rotation detector 52 as the display panel 10 downwardly rotates to within a predetermined angle of the computer main body 20 to close it. Here, the interrupt signal output from the microcomputer 41 a is supplied to the control routine part 43a stored in a ROM, through the CPU 71.

The control routine part 43a controls the audio controller 42a according to the interrupt signal to make the audio signal output part 61 output the alarm signal through the speaker 63. That is, the control routine part 43a controls the audio controller 42a to output the audio signal corresponding to the alarm signal. Here, the control routine part 43a may be provided as a part of a basic input/output system (BIOS).

With the foregoing configuration, as the alarm signal, such as an alarm sound, is output to inform a user that the disk accommodating part 32 is open, when he/she downwardly rotates the display panel 10, a surface of the display panel 10 may be prevented from being damaged due to contact with the disk cover member 31, when the display part 10 closes the computer main body 20 when the disk accommodating part 32 is open.

Here, the audio controller 42a may enable a PC beep signal to be output to make a PC beep as an alarming sound provided in the audio codec 62 output through the speaker 63, instead of outputting the audio signal corresponding to the alarm signal to the audio codec 62 of the audio signal output part 61.

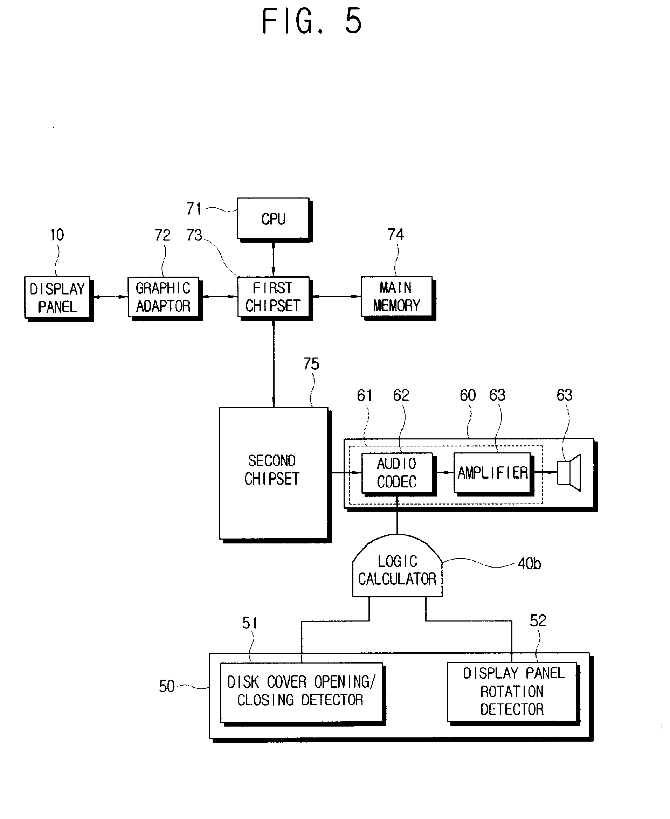

Referring now to Figure 5, a control block diagram of an example computer system such as a portable computer 1 according to a second embodiment of the present invention is illustrated. As shown in Figure 5, a control unit according to the second embodiment of the present invention may comprise a logic calculator 40b which logically calculates a detection result of a disk cover opening/closing detector 51 and that of a display panel rotation detector 52, and controls an audio signal generator 61 of an alarm unit 60 as to whether to output a PC beep signal.

For example, the logic calculator 40b may enable the PC beep signal of the audio codec 62 to be output when a second detection signal is input from the disk cover opening/closing detector 51 as a disk accommodating part 32 is open, and when a first detection signal is input from the display panel rotation detector 52 as the display panel 10 downwardly rotates to within a predetermined angle of the computer main body 20 to close it.

While there have been illustrated and described what are considered to be example embodiments of the present invention, it will be understood by those skilled in the art and as technology develops that various changes and modifications may be made and equivalents may be substituted for elements thereof without departing from the true scope of the present invention as defined by the claims. Many modifications, permutations, additions and sub-combinations may be made to adapt the teachings of the present invention to a particular situation without departing from the scope thereof. For example, the detection unit 50, the alarm unit 60 and the control unit 70 can be integrated into a single detection mechanism to perform all functions as described. In addition, the components and methods as shown in Figure 4 and Figure 5 can be implemented differently as long as their respective operations result in an audio warning provided to the device user as a result of the disk cover opening/closing detector detecting the disk cover member being located in an open position when the display panel rotation detector detects that the display panel is closing in relation to the computer main body within a predetermined angle. Accordingly, it is intended, therefore, that the present invention not be limited to the various example embodiments disclosed, but that the present invention includes all embodiments falling within the scope of the appended claims.

## Claims

1. A computer system comprising:
a main body (20) including means (32) for receiving an optical disk;
a disk cover (31) for opening and closing the disk receiving means (32);
a display panel (10) coupled to the main body (20) and moveable between open and closed positions;
means (50) for detecting a position of the display panel (10) relative to the disk cover (31); and
means (40, 60) for generating an alarm signal in dependence upon the relative position.

2. A computer system according to claim 1, wherein the detecting means (50) comprises:
a display panel rotation detector (52) for detecting a rotational position of the display panel (10) with respect to the main body (20); and
a disk cover opening/closing detector (51) for detecting whether the disk receiving means (32) is open or closed by the disk cover (31).

3. A computer system according to claim 2, wherein the alarm generating means (40, 60) is arranged to output the alarm signal, when the disk cover opening/closing detector (51) detects that the disk receiving means (32) is open and when the display panel rotation detector (52) detects that the display panel (10) is rotated to a predetermined angle of the main body (20) so as to close the main body (20).

4. A computer system according to claim 3, wherein the alarm generating means comprises one or more speakers (63) to output a sound, an audio signal generator (61) to output the alarm signal, via the one or more speakers (63), and a control unit (40) for controlling the audio signal generator (61).

5. A computer system according to claim 4, wherein the control unit (40) is arranged to control the audio signal generator (61) to output a personal computer beep signal as the alarm signal.

6. A computer system according to claim 5, wherein the control unit (40) comprises a logic calculator (40b) for logically calculating a detection result of the disk cover opening/closing detector (51) and a detection result of the display panel rotation detector (52), and for controlling whether the audio signal generator (61) outputs the personal computer beep signal as the alarm signal.

7. A computer system according to claim 5, wherein the control unit (40) comprises:
an audio controller (42a) for supplying an audio signal corresponding to the alarm signal to the audio signal generator (61);
a microcomputer (41 a) for generating an interrupt signal when the disk cover opening/closing detector (51) detects that the disk receiving means (32) is open and the display panel rotation detector (52) detects that the display panel (10) is rotated within the predetermined angle to the main body (20) so as to close the main body (20); and
a control routine (43a) for controlling the audio controller (42a) to output the audio signal corresponding to the alarm signal according to the interrupt signal of the microcomputer (41a).

8. A computer system according to any preceding claim, wherein a rotation shaft of the display panel (10) and that of the disk cover (31) are provided with respect to the main body (20) and the axes of the shafts are parallel.

9. A computer system according to any one of claims 1 to 8, wherein a rotation shaft of the display panel (10) and that of the disk cover (31) are provided with respect to the main body (20) and the axes of the shafts cross each other.

10. A method of controlling a computer system which has a main body (20) including means (32) for receiving an optical disk, a disk cover (31) for opening and closing the disk receiving means (32), and a display panel (10) coupled to the main body (20) and moveable between open and closed positions, the method comprising:
detecting a position of the display panel (10) relative to the disk cover (31);
generating an alarm signal in dependence upon the relative position.

11. A method according to claim 10, wherein the alarm signal is output when the disk receiving means (32) is open and the display panel (10) is rotated within a predetermined angle of the main body (20) so as to close it.

12. A method according to claim 10 or claim 11, wherein the alarm signal is audio generated via a speaker (63).

13. A computer program containing a control routine which, when executed by a computer processor for controlling a computer system, enables the method of any one of claims 10 to 12 to be performed.
